# EUROPÄISCHE PATENTANMELDUNG

(11) **EP 1 096 809 A2**
(43) Veröffentlichungstag der Anmeldung: **02.05.2001**
(21) Anmeldenummer: 00440262.4
(22) Anmeldetag: 29.09.2000
(51) Int. Cl.: H04Q 3/00

(54) **Verfahren zum Bereitstellen von IN-Diensten**

(30) Priorität: 20.10.1999 DE 19950501
(71) Anmelder: ALCATEL, 75008 Paris (FR)
(72) Erfinder: Lautenschlager, Wolfgang, 71287 Weissach-Flacht (DE)
(74) Vertreter: Zinsinger, Norbert

(57) **Zusammenfassung**

Die Erfindung betrifft ein Verfahren und ein System zum Bereitstellen von IN-Diensten sowie eine Managementeinheit und ein Computerprodukt zur Unterstützung der Bereitstellung von IN Diensten. Über ein Signalisierungsnetz (SIGNET) werden Dienstnachrichten zwischen mindestens einer Dienstvermittlungsstelle (SSP1 bis SSP3) eines Kommunikationsnetzes (KOMNET) und zwei oder mehr Dienststeuereinheiten (SCP1 bis SCP3) ausgetauscht, die Dienstlogika zur Steuerung der Erbringung von IN Diensten für Rufe ausführen. Die mindestens eine Dienstvermittlungsstelle (SSP1 bis SSP3) adressiert zur Triggerung der Erbringung eines IN Dienstes eine spezielle Dienstnachricht gemäß einer internen Zuordnungsvorschrift an eine der zwei oder mehr Dienststeuereinheiten und versendet sie mit dieser so gebildeten Ziel-Adressierung über das Signalisierungsnetz (SIGNET). Die Zuordnung der Aufgabe, die Erbringung eines speziellen IN Dienstes für eine spezielle Dienstvermittlungsstelle zu steuern, zu einer Dienststeuereinheit wird dynamisch geändert. Die Bedeutung der Ziel-Adressierung der speziellen Dienstnachricht innerhalb des Signalisierungsnetzes wird gemäß der Änderung dieser Zuordnung durch Manipulation der Wegeleitung der Dienstnachrichten durch das Signalisierungsnetz (SIGNET) dynamisch an die Änderung dieser Zuordnung angepaßt.

## Beschreibung

Die Erfindung betrifft ein Verfahren zum Bereitstellen von IN-Diensten nach dem Oberbegriff von Anspruch 1, ein System zum Bereitstellen von IN-Diensten nach dem Oberbegriff von Anspruch 8, eine Managementeinheit zur Unterstützung der Bereitstellung von IN Diensten nach dem Oberbegriff von Anspruch 9 und ein Computerprodukt zur Unterstützung der Bereitstellung von IN Diensten nach dem Oberbegriff von Anspruch 10.

Die Erfindung geht von dem Aufbau eines Dienstbereitstellungssystems gemäß der IN-Architektur (IN = Intelligent Network) aus, wie es beispielsweise in dem Artikel "Produkte für intelligente Netze", Elektrisches Nachrichtenwesen - Band 63, Nummer 4, 1989, Seiten 321 bis 330, von J.-P. Euzen und J. B. Kerihuel beschrieben ist.

Zum Bereitstellen von IN Diensten werden INAP Nachrichten (INAP = Intelligent Network Application Part) zwischen Dienstvermittlungsstellen (SSP = Service Switching Point) eines Telekommunikationsnetzes und Dienststeuereinheiten (SCP = Service Control Point) ausgetauscht. Der Austausch der INAP Nachrichten erfolgt über das Signalisierungsnetz des Telekommunikationsnetzes. Die Dienstvermittlungsstellen triggern die Erbringung von IN Diensten für Rufe des Telekommunikationsnetzes, indem sie einen INAP-Dialog mit einer der Dienststeuereinheiten initiieren. Die Dienststeuereinheiten führen eine dem angeforderten IN Dienst entsprechende Dienstelogik aus und steuern damit das Erbringen eines IN Diensten für einen Rufe. Die Zuordnung eines von einer Dienstvermittlungsstelle initiierten INAP - Dialogs zu einer Dienststeuereinheit ist hierbei durch den angeforderten IN Dienst vorbestimmt.

Der Erfindung liegt nun die Aufgabe zugrunde, die Bereitstellung von IN Diensten effektiver zu gestalten.

Diese Aufgabe wird gelöst durch ein Verfahren zum Bereitstellen von IN-Diensten nach der Lehre von Anspruch 1, ein System zum Bereitstellen von IN-Diensten nach der Lehre von Anspruch 8, eine Managementeinheit zur Unterstützung der Bereitstellung von IN Diensten nach der Lehre von Anspruch 9 und ein Computerprodukt zur Unterstützung der Bereitstellung von IN Diensten nach der Lehre von Anspruch 10.

Der Erfindung liegt hierbei der Gedanke zugrunde, die Aufgabe, die Erbringung eines speziellen IN Dienstes für eine spezielle Dienstvermittlungsstelle zu steuern, dynamisch Dienststeuereinheiten zuzuordnen, indem die Wegeleitung von IN bezogenen Nachrichten durch das Signalisierungsnetz, über das Dienstvermittlungsstellen und Dienststeuereinheiten miteinander kommunizieren, mittels Manipulation der Wegeleitung des Signalisierungsnetzes dynamisch geändert wird.

Die Vorteile der Erfindung besteht darin, daß auf technisch mit geringem Aufwand zu realisierende Weise die Zuordnung eines von einer Dienstvermittlungsstelle initiierten INAP - Dialogs zu einer Dienststeuereinheit dynamisiert wird. Dadurch wird zum einen eine bessere Lastverteilung zwischen den Dienststeuereinheiten ermöglicht. Das Dienstbereitstellungssystem kann somit viel besser Spitzenauslastungen bestimmter Dienste verkraften, die Dienstgüte wird verbessert, weniger Dienststeuereinheiten müssen für die Bereitstellung derselben Dienstgüte vorgehalten werden.

Weiter kann auch auf eine Änderung von Lastprofilen, die IN Diensten zugeordnet sind, dynamisch reagiert werden. Lastprofile von IN Diensten können somit dynamisch an das Teilnehmerverhalten angepaßt werden und das Dienstbereitstellungssystem kann somit im Folgenden dynamisch an die Änderung der Lastprofile angepaßt werden. Damit werden dann auch für diesen Fall die oben beschriebenen Vorteile erreicht.

Weiter wird die Ausfallsicherheit des Systems erhöht, eine Vielzahl von Ausfallsicherungsstrategien kann implementiert werden. Im Normalbetrieb wird weiter im Mittel die Geschwindigkeit der IN Diensterbringung erhöht.

Weitere Vorteile der Erfindung bestehen darin, daß die Dynamisierung transparent für Dienstvermittlungsstellen und Dienststeuereinheiten ist. Bestehende Komponenten und Protokolle müssen nicht geändert werden. Dadurch wird es ermöglicht, die Erfindung schnell und mit geringem Aufwand in bereits bestehende Dienstbereitstellungssysteme zu integrieren. Weitere Vorteile bestehen in einer Entkopplung der Dynamisierungsfunktion von der Dienstbereitsellungsfunktion, was die Gesamtkomplexität des Gesamtsystems senkt und damit auch die Implementierungskosten senkt.

Weitere Vorteile der Erfindung bestehen darin, daß hierdurch ein flexibleres Dienstmanagement ermöglicht wird.

Vorteilhafte Ausgestaltungen der Erfindung sind den Unteransprüchen zu entnehmen.

Im folgenden wir die Erfindung anhand mehrerer Ausführungsbeispiele unter Zuhilfenahme beiliegender Zeichnungen beispielhaft erläutert.
- Fig. 1: zeigt ein Blockschaltbild eines erfindungsgemäßen Systems zum Bereitstellen von IN Diensten.
- Fig. 2: zeigt eine funktionelle Darstellung eines Ausschnittes des erfindungsgemäßen Systems zum Bereitstellen von IN Diensten nach Fig. 1

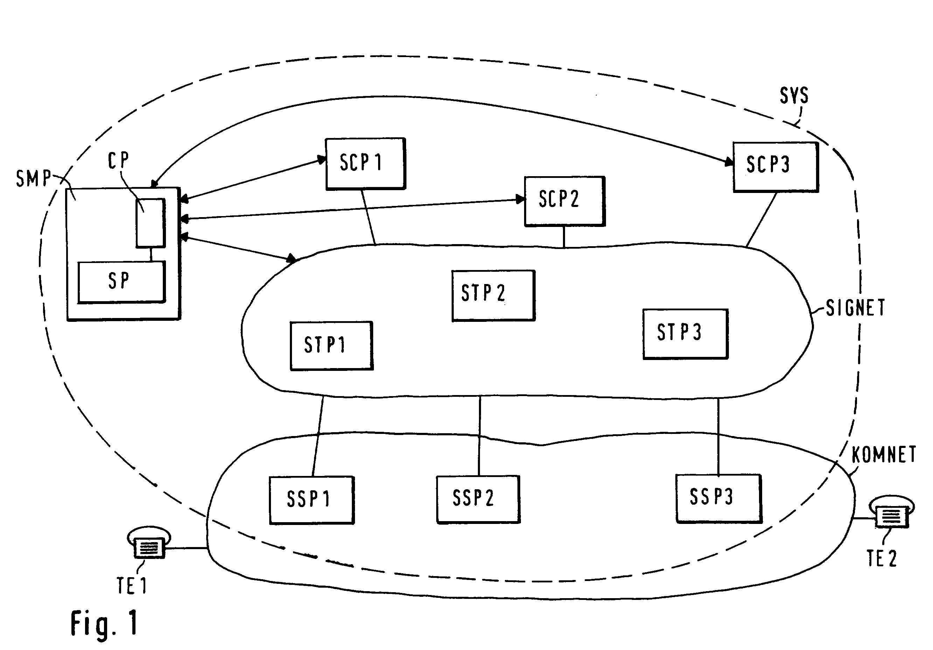

Fig. 1 zeigt ein Kommunikationsnetz KOMNET, ein Signalisierungsnetz SIGNET, eine Dienstmanagementeinheit SMP und drei Dienststeuereinheiten SCP1 bis SCP3.

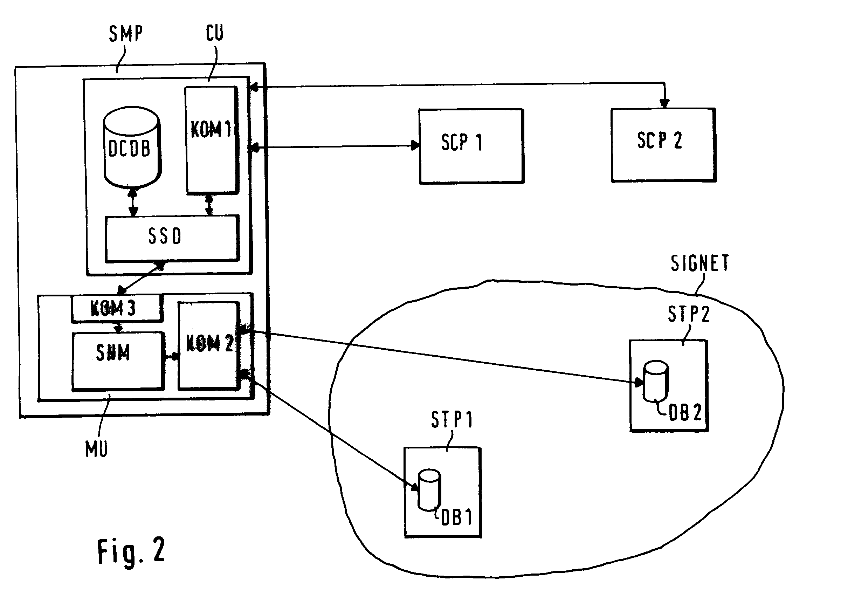

Von den mit dem Kommunikationsnetze KOMNET verbundenen Endgeräten sind in Fig. 2 beispielhaft zwei Endgeräte TE1 und TE2 gezeigt. Bei diesen Endgeräten handelt es sich um für den Anschluß an das Kommunikationsnetze KOMNET geeignete Endgeräte, beispielsweise um ISDN-Fernsprechgeräte, Faxgeräte oder Computer.

Das Kommunikationsnetz KOMNET ist ein Fernsprechnetze, vorzugsweise ein ISDN-Netze (ISDN = Integrated Services Digital Network). Teilnetze des Kommunikationsnetz KOMNET können jeweils unterschiedlichen Netzbetreibern zugeordnet sein. Weiter ist es möglich, daß es sich bei dem Kommunikationsnetz KOMNET oder eines der Teilnetze des Kommunikationsnetzes KOMNET um ein Mobilfunknetz handelt, beispielsweise nach dem GSM Standard (Global System for Mobile Communication). Weiter ist es auch möglich, daß es sich bei dem Kommunikationsnetz KOMNET um ein breitbandiges Kommunikationsnetze handelt, das neben der Sprach- beispielsweise auch eine Bildkommunikation und eine Datenkommunikation zwischen Teilnehmern ermöglicht.

Das Kommunikationsnetz KOMNET weist mehrere Vermittlungsstellen auf, bei denen es sich zum einen um Teilnehmervermittlungsstellen und zum anderen um Transitvermittlungsstellen handelt. Diese Vermittlungsstellen sind untereinander hierarchisch über Nutzkanäle verbunden, wobei die Teilnehmeranschlußvermittlungsstellen die untere und die Transitvermittlungsstelle die obere Hirarchieebene darstellen. Weiter sind die Vermittlungsstellen untereinander über Signalisierungskanäle verbunden, über die Signalisierungsnachrichten zwischen den Vermittlungsstellen ausgetauscht werden können. Das so gebildete Signalisierungsnetz entspricht hierbei beispielsweise dem CCITT Signalisierungssystem Nr. 7 und enthält neben den Vermittlungsstellen auch Signalisierungspunkte, die auch als Signalling Transfer Points (STP) bezeichnet werden. Diese Signalisierungspunkte führen u. a. die Vermittlung der über das Signalisierungsnetz übertragenen Signalisierungsnachrichten durch. Innerhalb des Signalisierungsnetzes besteht hierbei ein eigenes Adressierungsschema. Signalisierungsnachrichten werden von den Signalisierungsknoten gemäß einer Vermittlungsstellen-Kennung, dem sogenannten Signalling Point Code, vermittelt.

Das Kommunikationsnetz KOMNET weist mehrere speziell ausgestaltete Vermittlungsstellen, sogenannte Dienstvermittlungsstellen, auf, von denen in Fig. 1 drei Dienstvermittlungsstellen SSP1 bis SSP3 gezeigt sind. Diese Dienstvermittlungsstellen bilden zusammen mit den Dienststeuereinheiten SCP1 bis SCP3 und der Dienstmanagementeinheit SMP ein System SYS zum Bereitstellen von IN Diensten.

Die Dienstvermittlungsstellen SSP1 bis SSP3 kommunizieren über das Signalisierungsnetz SIGNET mit den Dienststeuereinheiten SCP1 bis SCP3. Die Dienstvermittlungsstellen SSP1 bis SSP3 weisen eine sogenannte Service-Switching-Funktionalität auf, die in ihrer Funktionalität den Spezifikationen der IN Architektur (IN = Intelligent Network, beispielsweise in der ITU-T Recommendation Q.1214 beschrieben) entspricht.

Das Signalisierungsnetz SIGNET dient den Dienstvermittlungsstellen SSP1 bis SSP3 und den Dienststeuereinheiten SCP1 bis SCP3 als Kommunikationsmedium zum Austausch von Dienstnachrichten. Von den Vermittlungsknoten des Signalisierungsnetzes SIGNET sind in Fig. 1 beispielhaft drei Vermittlungsknoten STP1 bis STP3 gezeigt. Das Signalisierungsnetz SIGNET wird von einem Teil des Signalisierungsnetz des Kommunikationsnetzes KOMNET gebildet, das, wie bereits oben ausgeführt, beispielsweise gemäß dem CCITT Signalisierungssystem Nr. 7 implementiert ist.

Es ist auch möglich, daß das Signalisierungsnetz SIGNET nicht Teil des Signalisierungsnetzes des Kommunikationsnetzes KOMNET ist. Es kann sich bei dem Signalisierungsnetz SIGNET auch um ein andersartiges Kommunikationsnetz zur Datenkommunikation handelt. Ein Beispiel für ein solches Kommunikationsnetze ist ein IP-Netz (IP = Internet Protokoll), das auf ein oder mehrere LANs (Local Area Network) oder MAN (Metropolitan Area Networks) aufsetzt, die beispielsweise ein Ethernet, Token-, DQDB-oder ATM- Transportprotokoll (DQDB= Distributed Queue Dual Bus, ATM = Asynchronous Transfer Mode) verwenden. Die Vermittlungsknoten STP1 bis STP3 werden in diesem Fall vorzugsweise von Routern der Ebene 3 gebildet.

Die Dienststeuereinheiten SCP1 bis SCP3 tauschen mit den Dienstvermittlungsstellen SSP1 bis SSP3 Dienstnachrichten aus und führen Dienstlogika zur Steuerung der Erbringung von IN Diensten für Rufe des Kommunikationsnetzes KOMNET aus. Sie erbringen hierbei eine Dienststeuerfunktion im Sinne der IN Architektur.

Die Dienststeuereinheiten SCP1 bis SCP3 werden jeweils von ein oder mehreren miteinander verbunden Rechnern gebildet, auf deren Systemplattform Applikationsprogramme zur Steuerung der Funktionen der Dienststeuereinheiten SCP1 bis SCP3 ablaufen. Bei einer Dienstlogik handelt es sich um ein Programm, das den Ablauf eines speziellen IN Dienstes steuert. Eine beliebige Anzahl verschiedener Prozesse, die jeweils dieses Programm für einen anderen Ruf ausführen, können hierbei parallel auf einer der Dienststeuereinheiten SCP1 bis SCP3 ablaufen.

Die Dienstvermittlungsstellen SSP1 bis SSP3 triggern nun beim Auftreten besonderer Triggerereignisse die Erbringung von IN Diensten für Rufe des Kommunikationsnetzes KOMNET. Ein solches Triggerereignis besteht beispielsweise darin, daß der Ruf an eine ganz bestimmte Zielrufnummer gerichtet wird. Beim Auftreten eines solchen Triggerereignisses adressieren die Dienstvermittlungsstellen SSP1 bis SSP3 zur Triggerung der Erbringung eines IN Dienstes eine spezielle Dienstnachricht gemäß einer internen Zuordnungsvorschrift an eine der Dienststeuereinheiten SCP1 bis SCP3. Die interne Zuordnungsvorschrift ist eine voreingestellte Zuordnung, die jedem möglichen Triggerereignis eine bestimmte Dienststeuereinheit zuordnet. Die voreingestellte Zuordnung kann sich von Dienstvermittlungsstelle zu Dienstvermittlungsstelle ändern. Die so mit einer Ziel-Adressierung gemäß der internen Zuordnungsvorschrift versehene Dienstnachricht wird über das Signalisierungsnetz SIGNET versendet. Die spezielle Dienstnachricht ist so gestaltet, daß sie die sie empfangende Dienststeuereinheit der Dienststeuereinheiten SCP1 bis SCP3 auffordert, die Erbringung eines speziellen IN Dienstes für den in der versendenden Dienstvermittlungsstelle anliegenden Ruf zu steuern. Auf den Empfang einer solchen Dienstnachricht führen die Dienststeuereinheiten die dem angeforderten IN Dienst entsprechende Dienstlogik aus und steuern hierbei durch Senden von Dienstnachrichten an die entsprechende Dienstvermittlungsstelle und eventuell an Dienstunterstützungssysteme die Erbringung des angeforderten IN Dienstes für den Ruf.

Die Dienstvermittlungsstellen SSP1 bis SSP3 adressieren somit laufend zur Triggerung der Erbringung von IN Diensten für Rufe des Kommunikationsnetzes SIGNET spezielle Dienstnachricht gemäß einer internen Zuordnungsvorschrift an die zwei oder mehr Dienststeuereinheiten und versenden diese speziellen Dienstnachrichten mit dieser gemäß der internen Zuordnungsvorschrift gebildeten Ziel-Adressierung über das Signalisierungsnetz SIGNET.

Die Dienstmanagementeinheit SMP kommuniziert mit den Dienststeuereinheiten SCP1 bis SCP3 und mit Komponenten des Signalisierungsnetzes SIGNET. Die Dienstmanagementeinheit SMP wird von einem oder mehreren miteinander verbundenen Rechnern gebildet, auf denen eine beispielsweise aus einem Betriebssystem und einer Datenbank bestehende Software-Plattform aufsetzt. Software-Plattform und Rechner bilden zusammen einen Computer SP. In Verbindung mit einem Computerprodukt CP führt der Computer SP folgende Funktionen aus:

Die Dienstmanagementeinheit SMP ändert die Zuordnung der Aufgabe, die Erbringung eines speziellen IN Dienstes für eine spezielle Dienstvermittlungsstelle zu steuern, zu einer Dienststeuereinheit dynamisch. Weiter greift sie auf das Signalisierungsnetz SIGNET zu und manipuliert hierdurch die Wegeleitung der Dienstnachrichten durch das Signalisierungsnetz SIGNET. Sie paßt hierbei die Bedeutung der Ziel-Adressierung der speziellen Dienstnachricht innerhalb des Signalisierungsnetzes SIGNET und damit die Wegeleitung der speziellen Dienstnachrichten gemäß der Änderung dieser Zuordnung durch Manipulation der Wegeleitung der Dienstnachrichten durch das Signalisierungsnetz SIGNET dynamisch an die Änderung dieser Zuordnung an.

Das Computerprodukt CP wird von einem Datenträger und von einem auf diesem Datenträger abgespeicherten Computerprogramm gebildet. Läuft dieses Computerprogramm auf dem Computer SP ab, dann führt die Dienstmanagementeinheit SMP die oben beschriebenen Funktionen aus. Die Dienstmanagementeinheit SMP wird so von dem Computer CP und diesem Computerprogramm gebildet. Das Computerprodukt CP kann auch allein von diesem Computerprogramm als solchem gebildet werden.

Es ist auch möglich, daß auf dem Computer SP weitere Applikationsprogramme ablaufen, die Dienstmanagementfunktionen oder Dienststeuerfunktionen betreffen.

Anhand von Fig. 2 wird nun die detaillierte Funktionsweise der Dienstmanagementeinheit SMP verdeutlicht.

Fig. 2 zeigt das Signalisierungsnetz SIGNET mit den Vermittlungsknoten STP1 und STP2, die Dienststeuereinheiten SCP1 und SCP2 und die Dienstmanagementeinheit SMP.

Die Dienstmanagementeinheit SMP weist aus funktioneller Sicht eine Steuereinheit CU und eine Managementeinheit MU auf.

Die Steuereinheit CU erfüllt die Funktion die Zuordnung der Aufgabe, die Erbringung eines speziellen IN Dienstes für eine spezielle Dienstvermittlungsstelle zu steuern, zu einer Dienststeuereinheit dynamisch zu ändern. Die Steuereinheit CU weist eine Kommunikationseinheit KOM1, eine Datenbasis DCDB und eine Zuordnungseinheit SSD auf.

Die Kommunikationseinheit KOM1 stellt die notwendigen Funktionen zur Kommunikation mit den Dienststeuereinheiten SCP1 bis SCP3 bereit. Die Kommunikation zwischen der Dienstmanagementeinheit SMP und den Dienststeuereinheiten SCP1 bis SCP3 erfolgt über ein Datennetz, z. B. einem X.25 Paketnetz oder einem Internet. Auch eine Kommunikation über das Signalisierungsnetz SIGNET wäre denkbar. Die Kommunikationseinheit KOM1 wird so im wesentlichen aus Funktionen zur Bearbeitung der für die Kommunikation über dieses Datennetz notwendigen Protokollstacks gebildet.

Die Datenbasis DCDB dient dem Abspeichern von ein oder mehreren Parameterdaten.

Die Zuordnungseinheit SSD greift mittels der Kommunikationseinheit KOM1 auf die Dienststeuereinheiten SCP1 bis SCP3 zu und fragt von diesen Umgebungsparametern wie beispielsweise die augenblickliche Auslastung der Dienststeuereinheiten SCP1 bis SCP3, die Art der von ihnen bereitgestellten IN Dienste und die quantitative Nachfrage nach diesen IN Diensten ab. Auch der Ausfall einer Dienststeuereinheit kann ein solcher Umgebungsparameter sein.

Es ist auch möglich, daß die Zuordnungseinheit SSD noch weitere Umgebungsparameter ermittelt. Beispiele hierfür sind die Ermittlung der Auslastung oder des Ausfalls von Netzbereichen des Signalisierungsnetzes SIGNET durch Zugriff auf Vermittlungsknoten des Signalisierungsnetzes SIGNET oder die Ermittlung der jeweiligen Zahl der IN-Dienstanforderungen pro Zeiteinheit und pro Dienstvermittlungsstelle durch Zugriff auf die einzelnen Dienstvermittlungsstellen SSP1 bis SSP3.

Die jeweils ermittelten Umgebungsparameter werden in der Datenbasis DCDB abgespeichert. Weiter sind in der Datenbasis vorgegeben Parametern wie beispielsweise die maximale Auslastung der einzelnen Dienststeuereinheiten, die in den Dienstvermittlungsstellen SSP1 bis SSP3 festgelegte interne Zuordnung von Diensten zu Dienststeuereinheiten oder die Art der in den jeweiligen Dienststeuereinheiten SSP1 bis SSP3 zur Verfügung stehenden verschiedenen Dienstlogika abgespeichert.

Aus den in der Datenbasis abgespeicherten Umgebungsparametern und den vorgegebenen Parametern berechnet die Zuordnungseinheit SSD fortlaufend die optimale Zuordnung der Aufgabe, die Erbringung eines speziellen IN Dienstes für eine spezielle Dienstvermittlungsstelle zu steuern, zu einer Dienststeuereinheit. Diese Zuordnung kann sich also ständig ändern. Ziel hierbei ist beispielsweise, eine möglichst gleichmäßige Auslastung der Dienststeuereinheiten SCP1 bis SCP3 zu erreichen. Der Dienst A wird für die Dienstvermittlungsstelle SSP1 beispielsweise der Dienststeuereinheit SCP1 und für die Dienstvermittlungsstellen SSP2 und SSP3 der Dienststeuereinheit SCP3 zugeordnet. Zeigt die Änderung der Umgebungsparameter eine bestimmte Änderung der Umgebungsbedingungen an, so wird beispielsweise der Dienst A für die Dienstvermittlungsstellen SSP1 und SSP2 der Dienststeuereinheit SCP1 und für die Dienstvermittlungsstellen SSP3 der Dienststeuereinheit SCP2 zugeordnet. Die Zuordnung der Aufgabe, die Erbringung eines speziellen IN Dienstes für eine spezielle Dienstvermittlungsstelle zu steuern, zu einer Diensteinheit wird somit dynamisch geändert.

Es ist auch möglich auf die Steuereinheit CU zu verzichten. Die augenblickliche Zuordnung könnte auch von einer sonstigen Steuer- oder Eingabeeinheit festgelegt und abgeändert werden.

Die Managementeinheit (MU) weist eine Schnittstelle KOM3 zur Steuereinheit CU, eine Dienstverteileinheit SNM und eine Kommunikationseinheit KOM2 auf.

Die Kommunikationseinheit KOM2 stellt die notwendigen Funktionen zur Kommunikation und zum Zugriff auf Vermittlungsknoten des Signalisierungsnetzes SIGNET bereit. Die Kommunikationseinheit KOM2 weist somit die notwendigen Funktionen zur Bearbeitung des Nr. 7 Protokollstacks und Steuerprotokolle/ Netzwerkmanagementprotokolle zum Zugriff auf die Steuerung der Vermittlungsknoten des Signalisierungsnetzes SIGNET auf.

Die Dienstverteileinheit SNM hat die Funktion, die Bedeutung der Ziel-Adressierung einer speziellen Dienstnachricht innerhalb des Signalisierungsnetzes SIGNET gemäß der Änderung der durch die Zuordnungseinheit SSD bestimmten Zuordnung durch Manipulation der Wegeleitung der Dienstnachrichten durch das Signalisierungsnetz dynamisch an die Änderung dieser Zuordnung anzupassen. Hierfür greift sie zum einen über die Schnittstelle KOM3 auf diese Zuordnung zu und zum anderen über die Kommunikationseinheit KOM2 auf Vermittlungsknoten des Signalisierungsnetzes SIGNET, beispielsweise die Vermittlungsknoten STP1 und STP2 zu.

Die zwischen den Dienstvermittlungsstellen SSP1 bis SSP3 und den Dienststeuereinheiten SCP1 bis SCP3 ausgetauschten Dienstnachrichten werden von INAP Nachrichten gebildet, die von SCCP Nachrichten (SCCP Steuerteil für Zeichengabetransaktionen nach CCITT Q701 bis Q707) transportiert werden. Die SCCP Nachrichten selbst werden mittels der darunter liegenden Protokollschichten (z. B. MTP) transportiert. INAP Nachrichten selbst werden mittels des TCAP Protokolls (TCAP = Transaction Capability Part) transportiert, das somit zwischen der SCCP Protokollebene und INAP Protokollebene liegt. Zur Manipulation der Wegeleitung der Dienstnachrichten innerhalb des Signalisierungsnetzes SIGNET wird die Wegeleitung der SCCP Nachrichten durch das Signalisierungsnetzes SIGNET dynamisch manipuliert.

Die Bedeutung der Ziel-Adressierung von Dienstnachrichten innerhalb des Signallisierungsnetzes SIGNET wird durch die Dienstverteileinheit SNM dadurch manipuliert, daß Routing-Tabellen von Vermittlungsknoten des Signalisierungsnetzes SIGNET manipuliert werden. Fig. 2 zeigt beispielsweise die Vermittlungsknoten STP1 und STP2 mit einer jeweiligen Speichereinheit DB1 bzw. DB2. Die Speichereinheiten DB1 und DB2 enthalten die jeweiligen Routing-Tabellen für die Wegeleitung von SCCP Nachrichten durch den jeweiligen Vermittlungsknoten STP1 bzw. STP2. Durch Manipulation dieser Routing-Tabellen, also durch eine Änderung der Einträge in diesen Tabellen, kann von der Dienstverteileinheit SNM die Wegeleitung von SCCP Nachrichten manipuliert werden. Durch eine Änderung der Einträge in diesen Tabellen manipuliert die Dienstverteileinheit SNM die Bedeutung der Ziel-Adressierung der Dienstnachrichten innerhalb des Signalisierungsnetzes, wodurch die Dienstnachrichten im Folgenden ohne Änderung der Ziel-Adresse zu einem anderen Anschluß des Signalisierungsnetzes SIGNET geleitet werden.

Eine weitere Möglichkeit der Manipulation der Bedeutung der Ziel-Adressierung von Dienstnachrichten innerhalb des Signallisierungsnetzes SIGNET besteht darin, daß die Zuordnungsvorschriften für die im Signalisierungsnetz SIGNET durchgeführte GTT Übersetzung (GTT = Global Title Translation, entspricht einer GT/ SPC Übersetzung; GT = Global Titel, SCP = Signalling Point Code) manipuliert wird. Das Signalisierungsnetzes SIGNET weist mehrere besonders ausgestaltete Vermittlungsknoten auf. Diese Vermittlungsknoten werden auch als Signalling Relay Points bezeichnet. Sie setzen eine Teilnehmerkennung (GT), die als Zieladresse in eine SCCP Nachricht eingetragen ist, in die Vermittlungsstellen-Kennung (SPC) der dieser Teilnehmerkennung zugeordneten Vermittlungsstelle um, also in das interne Adressierungsschema des Signalisierungsnetzes. Wird diese Zuordnungsvorschrift in diesen Vermittlungsknoten, also die GT/ SPC Übersetzung, verändert, so wird die Wegleitung innerhalb des Signalisierungsnetzes SIGNET verändert. Zur Manipulation der Wegeleitung greift die Dienstverteileinheit SNM auf die GT/ SPC Zuordnungsvorschriften in diesen Vermittlungsknoten zu und verändert sie derart, daß die gewünschte Wegeleitung innerhalb des Signallisierungsnetzes erreicht wird.

Diese Möglichkeit hat hierbei den Vorteil, daß zur Manipulation der Wegeleitung durch das Signalisierungsnetz auf eine geringere Anzahl von Vermittlungsknoten zugegriffen werden muß.

Es ist natürlich auch möglich, daß das Signalisierungsnetz SIGNET von einem andersartigen Datennetz gebildet wird, in dem beispielsweise ein IP Protokoll zum Transport von INAP Nachrichten verwendet wird. Auch bei einem derartigen Datennetz ist die Manipulation der Bedeutung der Ziel-Adressierung von Dienstnachrichten innerhalb des Signallisierungsnetzes SIGNET in analoger Anwendung der obigen Verfahrensweise möglich:

Die SPC Adressen nach Fig. 2 werden durch IP Adressen ersetzt. In analoger Weise zu dem nach Fig. 2 beschriebenen werden dann beispielsweise von der Dienstverteileinheit SNM die Routing-Tabellen von Vermittlungsknoten des Signalisierungsnetzes SIGNET manipuliert.

Vorzugsweise wird die Manipulation hierbei durch Veränderung der Routing-Tabellen der Ebene 3 Routing Funktion durchgeführt. Die Manipulation der Ziel-Adressierung innerhalb des Signallisierungsnetzes SIGNET erfolgt somit auf Ebene 3.

Auch eine Manipulation auf Ebene 2 wäre denkbar, beispielsweise bei Einsatz von ATM als Ebene 2 Protokoll (Ersatz von SPC Adressen durch ATM Adressen).

## Patentansprüche

1. Verfahren zum Bereitstellen von IN-Diensten, wobei bei dem Verfahren über ein Signalisierungsnetz (SIGNET) Dienstnachrichten zwischen mindestens einer Dienstvermittlungsstelle (SSP1 bis SSP3) eines Kommunikationsnetzes (KOMNET), die die Erbringung von IN Diensten für Rufe des Kommunikationsnetzes triggert, und zwei oder mehr Dienststeuereinheiten (SCP1 bis SCP3) ausgetauscht werden, die Dienstlogika zur Steuerung der Erbringung von IN Diensten für Rufe ausführen,
**dadurch gekennzeichnet**, daß die mindestens eine Dienstvermittlungsstelle (SSP1 bis SSP3) zur Triggerung der Erbringung eines IN Dienstes eine spezielle Dienstnachricht gemäß einer internen Zuordnungsvorschrift an eine der zwei oder mehr Dienststeuereinheiten adressiert und mit dieser gemäß der internen Zuordnungsvorschrift gebildeten Ziel-Adressierung über das Signalisierungsnetz (SIGNET) versendet, daß die Zuordnung der Aufgabe, die Erbringung eines speziellen IN Dienstes für eine spezielle Dienstvermittlungsstelle zu steuern, zu einer Dienststeuereinheit dynamisch geändert wird, und daß die Bedeutung der Ziel-Adressierung der speziellen Dienstnachricht innerhalb des Signalisierungsnetzes gemäß der Änderung dieser Zuordnung durch Manipulation der Wegeleitung der Dienstnachrichten durch das Signalisierungsnetz (SIGNET) dynamisch an die Änderung dieser Zuordnung angepaßt wird.

2. Verfahren nach Anspruch 1, dadurch gekennzeichnet, daß die Wegeleitung der Dienstnachrichten dadurch manipuliert wird, daß Routing-Tabellen von Vermittlungsknoten (STP1 bis STP3) des Signalisierungsnetzes (SIGNET) manipuliert werden.

3. Verfahren nach Anspruch 1, dadurch gekennzeichnet, daß die Wegeleitung der Dienstnachrichten dadurch manipuliert wird, daß Zuordnungsvorschriften (DB1, DB2) für die im Signalisierungsnetz (SIGNET) durchgeführte GT/ SPC Übersetzung manipuliert werden.

4. Verfahren nach Anspruch 1, dadurch gekennzeichnet, daß als Dienstnachrichten INAP Nachrichten ausgetauscht werden, die von SCCP Nachrichten transportiert werden, und daß zur dynamischen Manipulation der Wegeleitung der Dienstnachrichten die Wegeleitung der SCCP Nachrichten innerhalb des Signalisierungsnetzes (SIGNET) dynamisch manipuliert wird.

5. Verfahren nach Anspruch 1, dadurch gekennzeichnet, daß eine Dienstmanagementeinheit (SMP) aufgrund von Umgebungsparametern und vorgegeben Parametern die Aufgabe, die Erbringung eines speziellen IN Dienstes für eine spezielle Dienstvermittlungsstelle zu steuern, dynamisch Dienststeuereinheiten zuordnet und daß die Dienstmanagementeinheit (SMP) bei Änderung dieser Zuordnung eine entsprechende Manipulation der Wegeleitung der Dienstnachrichten durch das Signalisierungsnetz (SIGNET) veranlaßt.

6. Verfahren nach Anspruch 5, dadurch gekennzeichnet, daß die Dienstmanagementeinheit (SMP) als Umgebungsparameter Daten über die Auslastung der Dienststeuereinheiten (SCP1 bis SCP3) ermittelt.

7. Verfahren nach Anspruch 6, dadurch gekennzeichnet, daß die Dienstmanagementeinheit (SMP) als Umgebungsparameter Daten über die Auslastung der einzelnen IN Dienste ermittelt.

8. System (SYS) zum Bereitstellen von IN-Diensten, wobei das System mit mindestens einer Dienstvermittlungsstelle (SSP1 bis SSP3) eines Kommunikationsnetzes (KOMNET) versehen ist, die so ausgestaltet ist, daß sie die Erbringung von IN Diensten für Rufe des Kommunikationsnetzes triggert, und das System mit zwei oder mehr Dienststeuereinheiten (SCP1 bis SCP3) versehen ist, die so ausgestaltete sind, daß sie Dienstlogika zur Steuerung der Erbringung von IN Diensten für Rufe ausführen und zur Steuerung der Erbringung von IN Diensten für Rufe über ein Signalisierungsnetz (SIGNET) Dienstnachrichten mit der Dienstvermittlungsstelle (SSP1 bis SSP3) austauschen,
**dadurch gekennzeichnet**, daß die mindestens eine Dienstvermittlungsstelle (SSP1 bis SSP3) so ausgestaltet ist, daß sie zur Triggerung der Erbringung eines IN Dienstes eine spezielle Dienstnachricht gemäß einer internen Zuordnungsvorschrift an eine der zwei oder mehr Dienststeuereinheiten (SCP1 bis SCP3) adressiert und mit dieser gemäß der internen Zuordnungsvorschrift gebildeten Ziel-Adressierung über das Signalisierungsnetz (SIGNET) versendet, daß das System weiter mit einer Steuereinheit (CU) versehen ist, die so ausgestaltet ist, daß sie die Zuordnung der Aufgabe, die Erbringung eines speziellen IN Dienstes für eine spezielle Dienstvermittlungsstelle zu steuern, zu einer Dienststeuereinheit dynamisch ändert, und daß das System weiter mit einer Managementeinheit (MU) versehen ist, die so ausgestaltet ist, daß sie die Bedeutung der Ziel-Adressierung der speziellen Dienstnachricht innerhalb des Signalisierungsnetzes (SIGNET) gemäß der Änderung dieser Zuordnung durch Manipulation der Wegeleitung der Dienstnachrichten durch das Signalisierungsnetz (SIGNET) dynamisch an die Änderung dieser Zuordnung anpaßt.

9. Managementeinheit (MU) zur Unterstützung der Bereitstellung von IN Diensten in einer Kommunikationsumgebung, in der über ein Signalisierungsnetz (SIGNET) Dienstnachrichten zwischen mindestens einer Dienstvermittlungsstelle (SSP1 bis SSP3) eines Kommunikationsnetzes (KOMNET), die die Erbringung von IN Diensten für Rufe des Kommunikationsnetzes triggert, und zwei oder mehr Dienststeuereinheiten (SCP1 bis SCP3) ausgetauscht werden, die Dienstlogika zur Steuerung der Erbringung von IN Diensten für Rufe ausführen,
**dadurch gekennzeichnet**, daß die Managementeinheit (MU) mit einer Schnittstelle (KOM3) zu einer Steuereinheit (CU) versehen ist, die so ausgestaltet ist, daß sie die Zuordnung der Aufgabe, die Erbringung eines speziellen IN Dienstes für eine spezielle Dienstvermittlungsstelle zu steuern, zu einer Dienststeuereinheit dynamisch ändert, und daß die Managementeinheit (MU) mit einer Dienstverteileinheit (SNM) versehen ist, die so ausgestaltet ist, daß sie die Bedeutung der Ziel-Adressierung einer speziellen Dienstnachricht innerhalb des Signalisierungsnetzes (SIGNET) gemäß der Änderung dieser Zuordnung durch Manipulation der Wegeleitung der Dienstnachrichten durch das Signalisierungsnetz dynamisch an die Änderung dieser Zuordnung anpaßt, wobei die spezielle Dienstnachricht von der mindestens eine Dienstvermittlungsstelle (SSP1 bis SSP3) zur Triggerung der Erbringung eines IN Dienstes gemäß einer internen Zuordnungsvorschrift an eine der zwei oder mehr Dienststeuereinheiten (SCP1 bis SCP3) adressiert worden ist und mit dieser gemäß der internen Zuordnungsvorschrift gebildeten Ziel-Adressierung über das Signalisierungsnetz (SIGNET) versendet worden ist.

10. Computerprodukt (CP) zur Unterstützung der Bereitstellung von IN Diensten in einer Kommunikationsumgebung, in der über ein Signalisierungsnetz (SIGNET) Dienstnachrichten zwischen mindestens einer Dienstvermittlungsstelle (SSP1 bis SSP3) eines Kommunikationsnetzes (KOMNET), die die Erbringung von IN Diensten für Rufe des Kommunikationsnetzes triggert, und zwei oder mehr Dienststeuereinheiten (SCP1 bis SCP3) ausgetauscht werden, die Dienstlogika zur Steuerung der Erbringung von IN Diensten für Rufe ausführen,
**dadurch gekennzeichnet**, daß das Computerprodukt (CP) so ausgestaltetet ist, daß es in Verbindung mit einem Computer (SP) die Zuordnung der Aufgabe, die Erbringung eines speziellen IN Dienstes für eine spezielle Dienstvermittlungsstelle zu steuern, zu einer Dienststeuereinheit dynamisch ändert und die Bedeutung der Ziel-Adressierung einer speziellen Dienstnachricht innerhalb des Signalisierungsnetzes (SIGNET) gemäß der Änderung dieser Zuordnung durch Manipulation der Wegeleitung der Dienstnachrichten durch das Signalisierungsnetz (SIGNET) dynamisch an die Änderung dieser Zuordnung anpaßt, wobei die spezielle Dienstnachricht von der mindestens einen Dienstvermittlungsstelle (SSP1 bis SSP3) zur Triggerung der Erbringung eines IN Dienstes gemäß einer internen Zuordnungsvorschrift an eine der zwei oder mehr Dienststeuereinheiten (SCP1 bis SCP3) adressiert worden ist und mit dieser gemäß der internen Zuordnungsvorschrift gebildeten Ziel-Adressierung über das Signalisierungsnetz (SIGNET) versendet worden ist.
